# EUROPEAN PATENT SPECIFICATION

(11) **EP 3 406 057 B1**
(45) Date of publication and mention of the grant of the patent: **13.12.2023**
(21) Application number: 16703210.1
(22) Date of filing: 22.01.2016
(51) Int. Cl.: H04L 47/193, H04L 47/2408, H04W 8/04

(54) **DATA SUB-FLOW MANAGEMENT**
DATEN-SUBFLOW-VERWALTUNG
GESTION DE SOUS-FLUX DE DONNÉES

(43) Date of publication of application: 28.11.2018
(73) Proprietor: Nokia Technologies Oy, 02610 Espoo (FI)
(72) Inventor: BEDEKAR, Anand, Glenview Illinois 60026 (US); CATTONI, Andrea, 9240 Nibe (DK)
(74) Representative: Kolster Oy Ab
(86) International application number: PCT/US2016/014533
(87) International publication number: WO 2017/127107

(56) References cited:
- EP-A2- 1 096 739
- US-A1- 2011 044 167
- US-A1- 2011 194 411

## Description

### FIELD

The present invention relates to management of data sub-flows in communication between nodes.

### BACKGROUND

Communication networks, such as wire-line and cellular networks, may be arranged to provide communication resources to users desiring to use the communication networks for communication. Examples of communication resources include timeslots, spreading codes and frequency bands, or channels.

Communication resources may be provided to satisfy demand, such that, for example, a voice connection is assigned resources sufficient to convey voice, while a video connection is assigned resources sufficient to convey video. Conveying video may require more resources than voice, as in video, a visual element is conveyed in addition to voice.

Communication resources may be assigned based on quality of service, QoS, requirements. For example, video telephony may be feasible with a grainy, low-quality visual aspect, while robotic remote-operated surgery may require very accurate visual information at a low delay. Thus, information communicated to enable remote surgery may be assigned a very high QoS, while normal video telephony may make do with a neutral QoS. As a further example an emergency telephone call may be given more resources and/or a higher QoS to provide the caller a clear and guaranteed connection to an emergency dispatching station. QoS may comprise a quantity of resources allocated to a connection, and/or a priority of access to network resources given to the connection.

Connections routed over communication networks may be unidirectional, wherein information flows in one direction only, or bidirectional where information flows in two directions. An example of unidirectional communication is broadcasting, while a telephone conversation is an example of bidirectional communication. A further example of bidirectional communication is a download of data, where the receiver periodically acknowledges received chunks of the data.

Information may be conveyed over connections, such as protocol connections and/or sub-flows of protocol connections, in accordance with their QoS. For example, a packet with a high QoS may be allowed to overtake lower-QoS packets waiting for transmission in a buffer, thereby gaining priority access to the network. EP 1096739 describes establishing a IP session which utilises bi-directional communication. US2011/194411 relates to applying router quality of service on a cable modem interface on a per-service-flow basis.

### SUMMARY OF THE INVENTION

The invention is defined by the features of the independent claims. Some specific embodiments are defined in the dependent claims.

### BRIEF DESCRIPTION OF THE DRAWINGS

FIGURE 1 illustrates an example system in accordance with at least some embodiments of the present invention;
FIGURE 2 illustrates an example system in accordance with at least some embodiments of the present invention;
FIGURE 3 illustrates an example apparatus capable of supporting at least some embodiments of the present invention;
FIGURE 4 illustrates signalling in accordance with at least some embodiments of the present invention, and
FIGURE 5 is a flow graph of a method in accordance with at least some embodiments of the present invention.

### EMBODIMENTS

In a bidirectional sub-flow, a network node may request that an incoming direction QoS is aligned to an outgoing direction QoS by providing an in-band or out-of-band indication to such effect. With both directions having similar QoS, a bidirectional connection may be enabled to perform properly in accordance with the QoS. The network node needn't be an endpoint for the sub-flow.

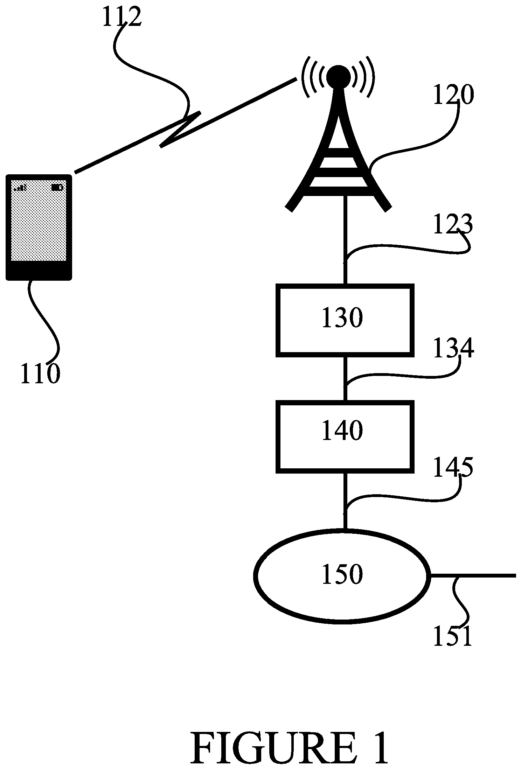

FIGURE 1 illustrates an example system in accordance with at least some embodiments of the present invention. While the system of FIGURE 1 is a cellular communication system, the invention is not limited thereto. The system of FIGURE 1 comprises device 110, which may comprise, for example, a personal device, a cellular telephone, a smartphone, a phablet device, a tablet computer, a laptop computer, a desktop computer or another kind of suitable device, for example. Device 110 may comprise a control device, such as, for example, a chipset, configured to control a smartphone, cellular telephone or other device.

Device 110 may communicate via air interface 112 with base station 120. In the illustrated example, base station 120 is arranged to function in accordance with a cellular communication standard, or technology, such as, for example, 5G, long term evolution, LTE, wideband code division multiple access, WCDMA, or interim standard 95, IS-95. Air interface 112 is arranged in accordance with a same technology as base station 120.Where transmitted via air interface 112 and base station 120, information originating in device 110 may be conveyed toward a recipient. In some systems, communication between device 110 and base station 120 takes place under the direction of base station 120, in other words, base station 120 rather than device 110 decides on resource utilisation on air interface 112.

Base station 120 is communicatively coupled, via connection 123, with network node 130. Network node 130 may comprise, for example, a base station controller, radio network controller or network node 130 may be comprised in a core network. Network node 130 is coupled, via connection 134, with gateway 140. Gateway 140, in turn, is coupled, via connection 145, with network 150, which may comprise, or be coupled with, the internet, for example. Network 150 may couple to a further entity, such as another gateway, via connection 151.

Connection 123, connection 134, connection 145 and connection 151 may comprise wire-line connections, or at least in part wireless connections. The connections needn't be of a same type. For example, at least some of them may comprise Ethernet and/or fibre optic connections.

Information communicated over air interface 112 may be communicated via a protocol stack, such that the information is repeatedly encapsulated into protocol layers that are comprised in the protocol stack. Some protocol layers may have device 110 and base station 120 as their endpoints, while some may have device 110 and a correspondent node distinct from base station 120 as endpoints. For example, a transmission control protocol, TCP, connection, may have device 110 and a server in network 150 as endpoints.

Examples of protocol layers having device 110 and base station 120 as endpoint include packet data convergence protocol, PDCP, and network convergence service, NCS. NCS may be seen as an evolution of PDCP. NCS and PDCP may collectively be referred to as a convergence protocol connection.

In general, in terms of FIGURE 1, a sub-flow may refer to a connection, such as a protocol flow, which traverses air interface 112 encapsulated in a lower-layer protocol connection. Thus, for example, a TCP or real-time transport protocol, RTP, connection conveyed within a convergence protocol connection may constitute a sub-flow.

In case sub-flows within a lower -layer protocol connection are given equal priority in accessing network resources, QoS between these sub-flows may be considered to be undifferentiated. If, on the other hand, a certain sub-flow, or indeed several sub-flows, is selected for preferential or decreased access to network resources, QoS may be considered differentiated. Differentiated QoS for a sub-flow may thus mean either increased or decreased quality of service, as compared to a default QoS among sub-flows in the lower-layer protocol connection. Increased QoS may be referred to as higher QoS, and decreased QoS may be referred to as lower QoS.

A QoS treatment for a sub-flow may comprise, for example, that packets of a higher QoS sub-flow may bypass packets of lower QoS sub-flows in a queuing buffer before being passed onto air interface 112, to thereby reduce delay for the higher QoS sub-flow. As another example, a processing thread in a processing core serving a higher QoS sub-flow may be given a higher priority than a processing thread serving a lower QoS sub-flow, to thereby give it more processor resources. Processing threads may perform actions relating to implementing the protocol of the sub-flow, which may comprise encryption, digital signing or other functions.

In case base station 120 identifies a sub-flow of interest, to be given a differentiated QoS, it may implement, in base station 120, a classifying rule to characterize packets of this sub-flow and associate them with the differentiated QoS. Depending on the nature of the sub-flow, this may or may not be sufficient to modify the performance of the sub-flow. In detail, where the sub-flow is unidirectional from base station 120 toward device 110, implementing the differentiated QoS in base station 120 is likely to be sufficient to increase the performance of the sub-flow. On the other hand, in case the sub-flow is bidirectional, implementing the differentiated QoS in base station 120 may not be enough. An example case of this is one where device 110 receives a media stream over the sub-flow in the downlink direction, and transmits acknowledgement packets back toward a correspondent node on network 150 in the uplink direction. In case the acknowledgement packets are queued in device 110, without higher QoS treatment, the server may interrupt the media stream, or downgrade it to lower quality.

In general, a bidirectional sub-flow may be implemented as two sub-flows, one on a first direction and another in the opposite direction. Even where a bidirectional sub-flow is implemented as one sub-flow, it may be seen to comprise two directional sub-flows. In general, a bidirectional sub-flow thus comprises a first sub-flow and a sub-flow in the other direction that corresponds to the first sub-flow.

To implement a bidirectional differentiated QoS for a sub-flow, base station 120 may provide an indication of the differentiated QoS to device 110. Note, that while discussed in connection with FIGURE 1 as being provided by base station 120, in other cases device 110 may identify a sub-flow as meriting differentiated QoS, and provide an indication of this to base station 120. The indication may comprise an identifier of the sub-flow the differentiated QoS applies to. The indication may comprise an instruction as to how the QoS is to be differentiated, for example, should it be increased or decreased with respect to a default QoS. Responsive to the indication, device 110 may construct a classifying rule to characterize packets of the indicated sub-flow, and associate them with the differentiated QoS. To reduce overhead associated with providing such an indication, the indication need not explicitly provide the classifying rule to identify the packets of the indicated sub-flow in the opposite direction. Rather, device 110 may infer the classification rule to identify the opposite-direction sub-flow based on attributes of the first-direction sub-flow, the traffic of which it received from base station 120. For example, device 110 may be configured to construct the classifying rule, responsive to the indication, based at least partly on inferences concerning the attributes of the first-direction sub-flow. For example, device 110 may construct the classifying rule based on an incoming packet header by flipping the source and destination addresses and port numbers. The addresses may comprise IP addresses, for example. The classifying rule may be constructed automatically, for example.

Base station 120 may provide the indication of differentiated QoS to device 110 in a header field of a protocol data unit of the lower-layer protocol connection wherein the sub-flow is encapsulated. The indication may comprise two bits, for example. Where two bits are used, an indication "00" may signify that nothing is to be done, "01" may signify that a new classifier is to be automatically constructed and applied, "10" may signify that an already derived classifier is to be removed, and "11" may be an undefined indication. The indication may be provided in a protocol data unit of the lower-layer protocol connection that does, or does not, carry a packet of the sub-flow the indication concerns. The indication may be provided more than once, to increase the likelihood it will be correctly received. While what is provided above are examples concerning specific implementations of the indication, other implementations are naturally possible. In other words, the invention is to be understood to be limited by the appended claims, rather than these disclosed examples.

Alternatively to providing the indication of differentiated QoS in a protocol data unit of the lower-layer protocol connection wherein the sub-flow is encapsulated, base station 120 may provide the indication separately in a resource control message, such as a radio resource control, RRC, message. RRC messages may be employed in cellular communication systems, for example. Such messages may be exchanged between base station 120 and device 110 to control resource usage by air interface 112 in various aspects. Also when delivered thus, the indication may comprise an identifier of the sub-flow the differentiated QoS applies to and/or an instruction as to how the QoS is to be differentiated. Also when delivered thus, the indication may be provided more than once.

Base station 120 may transmit the indication, at least partly, responsive to determining the sub-flow is to get the differentiated QoS. As such, base station 120 may determine this, for example, from information comprising characteristics of the sub-flow. For example, base station 120 may be configured to provide differentiated QoS of a predetermined type to all hypertext transfer protocol, HTTP, connections. Base station 120 may detect a new HTTP connection by performing packet inspection, whereby a HTTP Request-type packet may be detected. In general, base station 120 may detect, by packet inspection, a packet of a first protocol type, the first protocol type being configured for differentiated QoS. The first protocol type may be HTTP, as mentioned above, or RTP, for example. Alternatively, or additionally, base station 120 may be configured to obtain an indication of presence of certain types of flows of interest based on patterns of interest based on inspection pf packet patterns or signatures, or indeed other forms of traffic inspection.

Base station 120 may transmit the indication, at least partly, responsive to determining the sub-flow is bidirectional. As described above, the benefit of installing a classifying rule and differentiated QoS in the other end comes about from alignment of performance in both directions. Thus where the sub-flow is unidirectional, the benefit may not occur. Conversely, where the sub-flow is bidirectional, for example in the media stream example describe above, with differentiated QoS also in the uplink direction the acknowledgements will arrive faster and more reliably, supporting good performance of the media stream in the downlink direction. In case the differentiated QoS is a lower than default QoS, the classifying rule installed in device 110 responsive to the indication serves the function that uplink QoS is not unnecessarily high for the affected sub-flow, which frees resources to other sub-flows.

Base station 120 may provide to device 110 a second indication, the second indication indicating that differentiated QoS for the sub-flow is to be ended. The second indication may be provided in a similar way as the original indication, thus, for example, where the original indication was provided in a header field of the lower-layer protocol connection, the second indication may be likewise provided in a header field of the lower-layer protocol connection. In case the sub-flow has already been terminated, base station 120 may nonetheless provide the second indication, to thereby cause device 110 to remove the classifying rule created as a response to the original indication.

In general, base station 120 need not be an endpoint of the sub-flow the QoS of which is to be differentiated. In other words, a non-endpoint of a sub-flow may indicate to an endpoint of the sub-flow that a QoS of the sub-flow is to be differentiated.

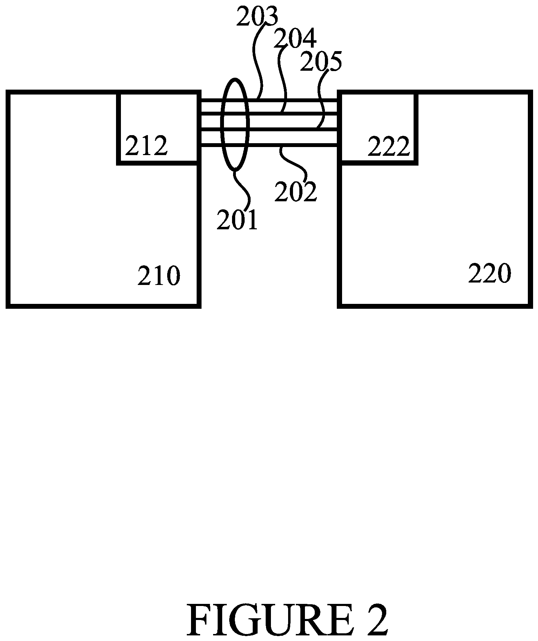

FIGURE 2 illustrates an example system in accordance with at least some embodiments of the present invention. The system comprises nodes 210 and 220. Node 210 comprises a convergence protocol communication function 212, which may be implemented in software, for example. Node 220 comprises a convergence protocol communication function 222, which may be implemented in software, for example. Disposed between node 210 and node 220 is a convergence protocol connection 201, such as for example a NCS or PDCP connection, via which are provided sub-flows 202, 203, 204 and 205. Node 210 may be an endpoint for the sub-flows, while node 220 is not an endpoint for the sub-flows.

Node 220 may provide the indication, described above, concerning differentiated QoS for sub-flow 202, for example, to node 210, to thereby cause node 210 to install a classifying rule and to apply the differentiated QoS to sub-flow 202 in the direction toward node 220. Where the differentiated QoS comprises a higher QoS, sub-flow 202 would thereby obtain preferential treatment with respect to sub-flows 203, 204 and 205 in the direction toward node 220.

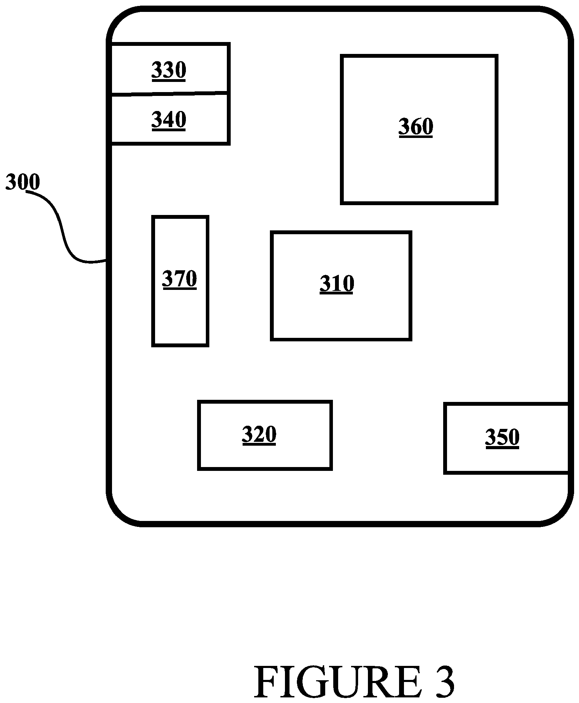

FIGURE 3 illustrates an example apparatus capable of supporting at least some embodiments of the present invention. Illustrated is device 300, which may comprise, for example, a mobile communication device such as device 110 or, in applicable aspects, base station 120, of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise more than one processor. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, long term evolution, LTE, IS-95, wireless local area network, WLAN, Ethernet, fibre optic and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, to request media streams and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention..

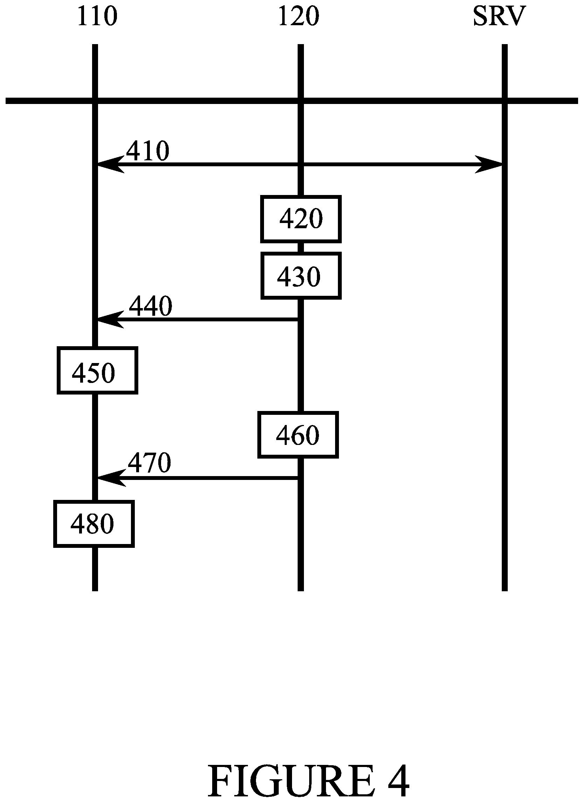

FIGURE 4 illustrates signalling in accordance with at least some embodiments of the present invention. On the vertical axes are disposed, on the left, device 110 of FIGURE 1, in the centre base station 120 of FIGURE 1 and on the right, a server SRV. Time advances from the top toward the bottom.

In phase 410, a TCP connection is established between device 110 and server SRV. From the point of view of base station 120, the TCP connection comprises a sub-flow conveyed between device 110 and base station 120 via a protocol connection, such as a convergence protocol connection, between device 110 and base station 120. Packets arriving along the sub-flow in the uplink direction are conveyed by base station 120 onward toward server SRV, and packets arriving along the TCP connection from server SRV, that is, in the downlink direction, are conveyed via the sub-flow from base station 120 to device 110.

In phase 420, base station 120 detects the TCP connection and implements a differentiated, higher than default QoS toward device 110 on the sub-flow conveying the TCP connection between base station 120 and device 110. In phase 430, base station determines to request the higher QoS for the sub-flow also in the direction from device 110 toward base station 120, and consequently base station provides, in phase 440, an indication to device 110 to such effect, as described above.

Responsive to the indication of phase 440, in phase 450 device 110 implements the differentiated, higher than default QoS toward base station 120 on the sub-flow conveying the TCP connection between device 110 and base station 120 . This may comprise implementing a classifying rule that characterized the sub-flow, for example.

In phase 460, base station 120 determines the TCP connection has ended, and responsively provides, in phase 470, a second indication to device 110, the second indication requesting device 110 to remove the differentiated QoS concerning the sub-flow, in the uplink direction. Responsively, in phase 480, device 110 may comply with the second indication, wherein this complying may comprise removing the classifying rule, for example.

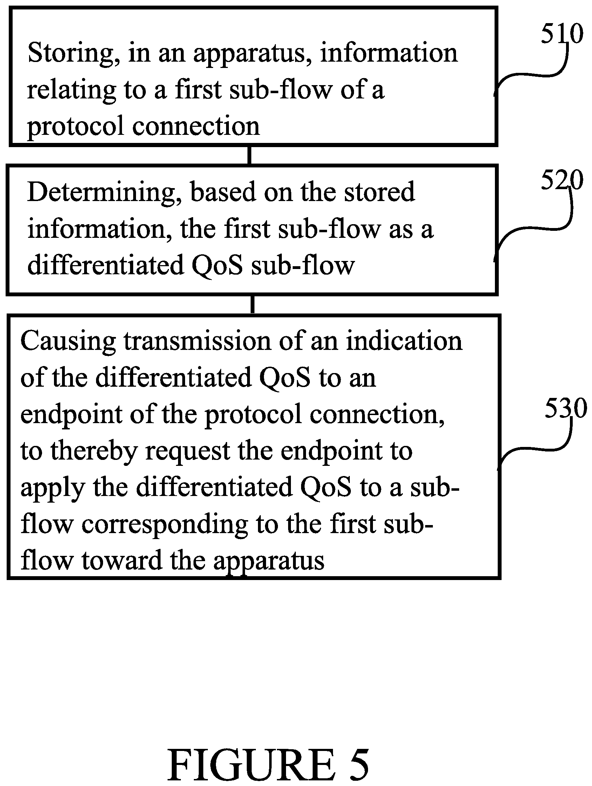

FIGURE 5 is a flow graph of a method in accordance with at least some embodiments of the present invention. The phases of the illustrated method may be performed in device 110 base station 120, or in a control device configured to control the functioning thereof, when implanted therein.

Phase 510 comprises storing, in an apparatus, information relating to a first sub-flow of a protocol connection. Phase 520 comprises determining, based on the stored information, the first sub-flow as a differentiated quality of service, QoS, sub-flow. Phase 530 comprises causing transmission of an indication of the differentiated QoS to an endpoint of the protocol connection, to thereby request the endpoint to apply the differentiated QoS to a sub-flow corresponding to the first sub-flow toward the apparatus.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in data communication, to more effectively manage quality of service.

### ACRONYMS LIST

- IP: Internet protocol
- HTTP: hypertext transfer protocol
- IS-95: interim standard 95
- LTE: long term evolution
- NCS: network convergence service
- PDCP: packet data convergence protocol
- RRC: radio resource control
- RTP: real-time transport protocol
- TCP: transmission control protocol
- WCDMA: wideband code division multiple access

### REFERENCE SIGNS LIST

| | |
|---|---|
| 110 | Device |
| 112 | Air interface |
| 120 | Base station |
| 130 | Network node |
| 140 | Gateway |
| 150 | Network |
| 123, 134, 145, 151 | Connection |
| 210, 220 | Node |
| 212, 222 | Convergence protocol communication function |
| 201 | Convergence protocol connection |
| 202, 203, 204, 205 | Sub-flow |
| 310-370 | Structure of the device of FIGURE 3 |
| 410 - 480 | Phases of the method of FIGURE 4 |
| 510 - 530 | Phases of the method of FIGURE 5 |

## Claims

1. An apparatus in a base station (120) of a cellular communication system, comprising:
- means for storing (510), in the apparatus, information relating to a first direction sub-flow of a bidirectional sub-flow of a protocol connection on an air interface between the apparatus and a user equipment (110), the first direction being from the apparatus towards the user equipment (110);
- means for determining (520), based on the stored information, the first direction sub-flow as a differentiated quality of service, QoS, sub-flow,
- in response to the determining, means for causing transmission (530) of a first indication of the differentiated QoS to the user equipment, to thereby request the user equipment to construct a classifier rule to apply the same differentiated QoS to an opposite direction sub-flow of the bidirectional sub-flow as used for packets in the first direction, the opposite direction being towards the apparatus from the user equipment (110), wherein the first indication comprises a first predetermined value in a header field of a packet transmitted on the first direction sub-flow of a bidirectional sub-flow, and
- means for providing a second indication to the user equipment (110) subsequent to the first indication, wherein the second indication indicates that applying the same differentiated QoS for the opposite direction sub-flow of the bidirectional sub-flow is to be ended.

2. An apparatus in a user equipment (110) of a cellular communication system, comprising:
- means for participating in communicating (410), over a protocol connection on an air interface between the apparatus and a base station (120), the protocol connection conveying a bidirectional sub-flow;
- means for receiving (440), in a receive direction of the bidirectional sub-flow, a first indication over the protocol connection from the base station, the indication indicating a differentiated quality of service, QoS, of the bidirectional sub-flow, wherein the first indication comprises a predetermined value in a header field of a packet received on the receive direction of the bidirectional sub-flow,
- means for constructing (450) a classifier rule to the bidirectional sub-flow in a transmit direction responsive to the first indication, based at least partly on the attributes of the receive direction of the bidirectional sub-flow by flipping source and destination addresses and port numbers of the header field, the classifier rule characterizing packets on the bidirectional sub-flow in the transmit direction with the same differentiated QoS as used for the packets in the receive direction of the bidirectional sub-flow, and
- means for receiving, in a receive direction of the bidirectional sub-flow, a second indication subsequent to the first indication, wherein the second indication indicates that applying the same differentiated QoS on the bidirectional sub-flow in the transmit direction is to be ended.

3. The apparatus according to any of claims 1 or 2, wherein the protocol connection comprises at least one of a network convergence service, NCS, connection and a packet data convergence protocol, PDCP, connection.

4. The apparatus according to claim 1-3, wherein the predetermined value is represented by bit combination, wherein a particular bit combination indicates that the classifier rule is to be constructed.

5. The apparatus of any of claims 1-4, wherein a protocol data unit header of the protocol connection comprises the second indication transmitted and/or received subsequently to the first indicator, the second indication indicating that the already constructed classifier is to be removed.

6. The apparatus of claim 5, wherein the second indication comprises a second predetermined value in the protocol data unit header.

7. The apparatus according to any of claims 1-5, wherein the bidirectional sub-flow comprises a transmission control protocol, TCP, connection.

8. The apparatus of any of claims 1, 3-7, wherein the apparatus further comprises:
means for detecting a packet of a first protocol type;
means for determining that the differentiated QoS is to be applied to packets of the first protocol type, wherein the first protocol type is hypertext transfer protocol, HTTP, or real-time transport protocol, RTP, and wherein the first indication is transmitted in response to the determining.

9. A method comprising:
- storing (510), in an apparatus, information relating to a first direction sub-flow of a bidirectional sub-flow of a protocol connection on an air interface between the apparatus and a user equipment (110), the first direction being from the apparatus towards the user equipment (110);
- determining (520), based on the stored information, the first sub-flow as a differentiated quality of service, QoS, sub-flow, and
- in response to the determining, causing transmission (530) of a first indication of the differentiated QoS to user equipment, to thereby request the user equipment to construct a classifier rule to apply the same differentiated QoS to an opposite direction sub-flow of the bidirectional sub-flow as used for packets in the first direction, the opposite direction being towards the apparatus from the user equipment (110), wherein the first indication comprises a predetermined value in a header field of a packet transmitted on the first direction sub-flow of the bidirectional sub-flow,
- providing a second indication to the user equipment (110) subsequent to the first indication, wherein the second indication indicates that applying the same differentiated QoS for the opposite direction sub-flow of the bidirectional sub-flow is to be ended.

10. A method comprising:
- participating in communicating (410), over a protocol connection on an air interface between a user equipment and a base station (120), the protocol connection conveying a bidirectional sub-flow;
- receiving (440), in a receive direction of the bidirectional sub-flow, a first indication over the protocol connection from the base station, the first indication indicating a differentiated quality of service, QoS, of the bidirectional sub-flow, wherein the first indication comprises a predetermined value in a header field of a packet received on the receive direction of the bidirectional sub-flow,
- constructing (450) a classifier rule to the bidirectional sub-flow in a transmit direction responsive to the first indication, based at least partly on the attributes of the receive direction of the bidirectional sub-flow by flipping source and destination addresses and port numbers of the header field, the classifier rule characterizing packets on the bidirectional sub-flow in the transmit direction with the same differentiated QoS as used for the packets in the receive direction of the bidirectional sub-flow, and
- receiving, in a receive direction of the bidirectional sub-flow, a second indication subsequent to the first indication, wherein the second indication indicates that applying the same differentiated QoS on the bidirectional sub-flow in the transmit direction is to be ended.

## Patentansprüche

1. Vorrichtung in einer Basisstation (120) eines zellularen Kommunikationssystems, die Folgendes umfasst:
- Mittel zum Speichern (510) von Informationen, die einen ersten Unterfluss in eine erste Richtung eines bidirektionalen Unterflusses einer Protokollverbindung an einer Luftschnittstelle zwischen der Vorrichtung und einer Teilnehmereinrichtung (110) betreffen, in der Vorrichtung, wobei die erste Richtung von der Vorrichtung zur Teilnehmereinrichtung (110) verläuft;
- Mittel zum Bestimmen (520) des Unterflusses in die erste Richtung auf Basis der gespeicherten Informationen als einen Unterfluss mit differenzierter Dienstqualität, QoS,
- in Reaktion auf das Bestimmen Mittel zum Veranlassen einer Übertragung (530) einer ersten Anzeige der differenzierten QoS zur Teilnehmereinrichtung, um dadurch anzufordern, dass die Teilnehmereinrichtung eine Klassifiziererregel konstruiert, um dieselbe differenzierte QoS auf einen Unterfluss in eine entgegengesetzte Richtung des bidirektionalen Unterflusses anzuwenden, wie er für Pakete in die erste Richtung verwendet wird, wobei die entgegengesetzte Richtung von der Teilnehmereinrichtung (110) zur Vorrichtung verläuft, wobei die erste Anzeige einen ersten vorbestimmten Wert in einem Headerfeld eines Pakets umfasst, das im Unterfluss in der ersten Richtung eines bidirektionalen Unterflusses übertragen wird, und
- Mittel zum Bereitstellen einer zweiten Anzeige für die Teilnehmereinrichtung (110) nach der ersten Anzeige, wobei die zweite Anzeige anzeigt, dass das Anwenden derselben differenzierten QoS für den Unterfluss in die entgegengesetzte Richtung des bidirektionalen Unterflusses zu beenden ist.

2. Vorrichtung in einer Teilnehmereinrichtung (110) eines zellularen Kommunikationssystems, die Folgendes umfasst:
- Mittel zum Teilnehmen am Kommunizieren (410) über eine Protokollverbindung an einer Luftschnittstelle zwischen der Vorrichtung und einer Basisstation (120), wobei die Protokollverbindung einen bidirektionalen Unterfluss übermittelt;
- Mittel zum Empfangen (440) einer ersten Anzeige über die Protokollverbindung von der Basisstation in einer Empfangsrichtung des bidirektionalen Unterflusses, wobei die Anzeige eine differenzierte Dienstqualität, QoS, des bidirektionalen Unterflusses anzeigt, wobei die erste Anzeige einen vorbestimmten Wert in einem Headerfeld eines Pakets umfasst, das in der Empfangsrichtung des bidirektionalen Unterflusses empfangen wird,
- Mittel zum Konstruieren (450) einer Klassifiziererregel für den bidirektionalen Unterfluss in einer Übertragungsrichtung in Reaktion auf die erste Anzeige mindestens teilweise auf Basis der Attribute der Empfangsrichtung des bidirektionalen Unterflusses durch Vertauschen von Quell- und Zieladressen und Portnummer des Headerfelds, wobei die Klassifiziererregel Pakete im bidirektionalen Unterfluss in der Übertragungsrichtung mit derselben differenzierten QoS charakterisiert, wie sie für die Pakete in der Empfangsrichtung des bidirektionalen Unterflusses verwendet wird, und
- Mittel zum Empfangen einer zweiten Anzeige nach der ersten Anzeige in einer Empfangsrichtung des bidirektionalen Unterflusses, wobei die zweite Anzeige anzeigt, dass das Anwenden derselben differenzierten QoS im bidirektionalen Unterfluss in der Übertragungsrichtung zu beenden ist.

3. Vorrichtung nach einem der Ansprüche 1 oder 2, wobei die Protokollverbindung mindestens eines von einer Netzwerkkonvergenzdienst(NCS)-Verbindung und einer Paketdatenkonvergenzprotokoll(PDCP)-Verbindung umfasst.

4. Vorrichtung nach Anspruch 1 bis 3, wobei der vorbestimmte Wert durch Bitkombination repräsentiert wird, wobei eine spezielle Bitkombination anzeigt, dass die Klassifiziererregel zu konstruieren ist.

5. Vorrichtung nach einem der Ansprüche 1 bis 4, wobei ein Protokolldateneinheitsheader der Protokollverbindung die zweite Anzeige umfasst, die nach dem ersten Indikator übertragen und/oder empfangen wurde, wobei die zweite Anzeige anzeigt, dass der bereits konstruierte Klassifizierer zu entfernen ist.

6. Vorrichtung nach Anspruch 5, wobei die zweite Anzeige einen zweiten vorbestimmten Wert im Protokolldateneinheitsheader umfasst.

7. Vorrichtung nach einem der Ansprüche 1 bis 5, wobei der bidirektionale Unterfluss eine Übertragungssteuerprotokoll(TCP)-Verbindung umfasst.

8. Vorrichtung nach einem der Ansprüche 1, 3 bis 7, wobei die Vorrichtung ferner Folgendes umfasst:
Mittel zum Detektieren eines Pakets eines ersten Protokolltyps;
Mittel zum Bestimmen, dass die differenzierte QoS auf Pakete des ersten Protokolltyps anzuwenden ist, wobei der erste Protokolltyp Hypertexttransferprotokoll, HTTP, oder Echtzeittransportprotokoll, RTP, ist, und wobei die erste Anzeige in Reaktion auf das Bestimmen übertragen wird.

9. Verfahren, das Folgendes umfasst:
- Speichern (510) von Informationen, die einen ersten Unterfluss in eine erste Richtung eines bidirektionalen Unterflusses einer Protokollverbindung an einer Luftschnittstelle zwischen der Vorrichtung und einer Teilnehmereinrichtung (110) betreffen, in einer Vorrichtung, wobei die erste Richtung von der Vorrichtung zur Teilnehmereinrichtung (110) verläuft;
- Bestimmen (520) des ersten Unterflusses auf Basis der gespeicherten Informationen als einen Unterfluss differenzierter Dienstqualitäts, QoS, und
- in Reaktion auf das Bestimmen Veranlassen einer Übertragung (530) einer ersten Anzeige der differenzierten QoS zur Teilnehmereinrichtung, um dadurch anzufordern, dass die Teilnehmereinrichtung eine Klassifiziererregel konstruiert, um dieselbe differenzierte QoS auf einen Unterfluss in eine entgegengesetzte Richtung des bidirektionalen Unterflusses anzuwenden, wie er für Pakete in die erste Richtung verwendet wird, wobei die entgegengesetzte Richtung von der Teilnehmereinrichtung (110) zur Vorrichtung verläuft, wobei die erste Anzeige einen vorbestimmten Wert in einem Headerfeld eines Pakets umfasst, das im Unterfluss in der ersten Richtung des bidirektionalen Unterflusses übertragen wird,
- Bereitstellen einer zweiten Anzeige für die Teilnehmereinrichtung (110) nach der ersten Anzeige, wobei die zweite Anzeige anzeigt, dass das Anwenden derselben differenzierten QoS für den Unterfluss in die entgegengesetzte Richtung des bidirektionalen Unterflusses zu beenden ist.

10. Verfahren, das Folgendes umfasst:
- Teilnehmen am Kommunizieren (410) über eine Protokollverbindung an einer Luftschnittstelle zwischen einer Teilnehmereinrichtung und einer Basisstation (120), wobei die Protokollverbindung einen bidirektionalen Unterfluss übermittelt;
- Empfangen (440) einer ersten Anzeige über die Protokollverbindung von der Basisstation in einer Empfangsrichtung des bidirektionalen Unterflusses, wobei die erste Anzeige eine differenzierte Dienstqualität, QoS, des bidirektionalen Unterflusses anzeigt, wobei die erste Anzeige einen vorbestimmten Wert in einem Headerfeld eines Pakets umfasst, das in der Empfangsrichtung des bidirektionalen Unterflusses empfangen wird,
- Konstruieren (450) einer Klassifiziererregel für den bidirektionalen Unterfluss in einer Übertragungsrichtung in Reaktion auf die erste Anzeige mindestens teilweise auf Basis der Attribute der Empfangsrichtung des bidirektionalen Unterflusses durch Vertauschen von Quell- und Zieladressen und Portnummer des Headerfelds, wobei die Klassifiziererregel Pakete im bidirektionalen Unterfluss in der Übertragungsrichtung mit derselben differenzierten QoS charakterisiert, wie sie für die Pakete in der Empfangsrichtung es bidirektionalen Unterflusses verwendet wird, und
- Empfangen einer zweiten Anzeige nach der ersten Anzeige in einer Empfangsrichtung des bidirektionalen Unterflusses, wobei die zweite Anzeige anzeigt, dass das Anwenden derselben differenzierten QoS im bidirektionalen Unterfluss in der Übertragungsrichtung zu beenden ist.

## Revendications

1. Appareil dans une station de base (120) d'un système de communication cellulaire, comprenant :
- des moyens pour stocker (510), dans l'appareil, des informations relatives à un sous-flux de première direction d'un sous-flux bidirectionnel d'une connexion de protocole sur une interface radio entre l'appareil et un équipement utilisateur (110), la première direction allant de l'appareil vers l'équipement utilisateur (110) ;
- des moyens pour déterminer (520), sur la base des informations stockées, le sous-flux de première direction comme étant un sous-flux de QoS (qualité de service) différenciée,
- en réponse à la détermination, des moyens pour provoquer la transmission (530) d'une première indication de la QoS différenciée à l'équipement utilisateur, pour ainsi demander à l'équipement utilisateur de construire une règle de classification, pour appliquer à un sous-flux de direction opposée du sous-flux bidirectionnel la même QoS différenciée que celle utilisée pour les paquets dans la première direction, la direction opposée allant vers l'appareil de l'équipement utilisateur (110), dans lequel la première indication comprend une première valeur prédéterminée dans un champ d'en-tête d'un paquet transmis sur le sous-flux de première direction d'un sous-flux bidirectionnel, et
- des moyens pour fournir une deuxième indication à l'équipement utilisateur (110) à la suite de la première indication, dans lequel la deuxième indication indique qu'il faut mettre fin à l'application de la même QoS différenciée pour le sous-flux de direction opposée du sous-flux bidirectionnel.

2. Appareil dans un équipement utilisateur (110) d'un système de communication cellulaire, comprenant :
- des moyens pour participer à la communication (410) sur une connexion de protocole sur une interface radio entre l'appareil et une station de base (120), la connexion de protocole véhiculant un sous-flux bidirectionnel ;
- des moyens pour recevoir (440) de la station de base, dans une direction de réception du sous-flux bidirectionnel, une première indicationsur la connexion de protocole, l'indication indiquant une QoS (qualité de service) différenciée du sous-flux bidirectionnel, dans lequel la première indication comprend une valeur prédéterminée dans un champ d'en-tête d'un paquet reçu dans la direction de réception du sous-flux bidirectionnel,
- des moyens pour construire (450) une règle de classification pour le sous-flux bidirectionnel dans une direction de transmission en réponse à la première indication, en se basant au moins en partie sur les attributs de la direction de réception du sous-flux bidirectionnel, en inversant les adresses source et destination et les numéros de port du champ d'en-tête, la règle de classification caractérisant les paquets sur le sous-flux bidirectionnel dans la direction de transmission avec la même QoS différenciée que celle utilisée pour les paquets dans la direction de réception du sous-flux bidirectionnel, et
- des moyens pour recevoir, dans une direction de réception du sous-flux bidirectionnel, une deuxième indication à la suite de la première indication, dans lequel la deuxième indication indique qu'il faut mettre fin à l'application de la même QoS différenciée sur le sous-flux bidirectionnel dans la direction de transmission.

3. Appareil selon l'une des revendications 1 ou 2, dans lequel la connexion de protocole comprend au moins une parmi une connexion de service NCS (convergence de réseau) et une connexion PDCP (protocole de convergence de données par paquets).

4. Appareil selon la revendication 1 à 3, dans lequel la valeur prédéterminée est représentée par une combinaison de bits, dans lequel une combinaison de bits particulière indique que la règle de classification doit être construite.

5. Appareil de l'une des revendications 1 à 4, dans lequel un en-tête d'unité de données de protocole de la connexion de protocole comprend la deuxième indication transmise et/ou reçue après le premier indicateur, la deuxième indication indiquant que le classificateur déjà construit doit être supprimé.

6. Appareil de la revendication 5, dans lequel la deuxième indication comprend une deuxième valeur prédéterminée dans l'en-tête d'unité de données de protocole.

7. Appareil selon l'une des revendications 1 à 5, dans lequel le sous-flux bidirectionnel comprend une connexion TCP (protocole de contrôle de transmission).

8. Appareil de l'une des revendications 1, 3 à 7, dans lequel l'appareil comprend en outre :
des moyens pour détecter un paquet d'un premier type de protocole ;
des moyens pour déterminer que la QoS différenciée doit être appliquée aux paquets du premier type de protocole, dans lequel le premier type de protocole est un HTTP (protocole de transfert hypertexte) ou un RTP (protocole de transport en temps réel), et dans lequel la première indication est transmise en réponse à la détermination.

9. Procédé comprenant :
- le stockage (510), dans un appareil, d'informations relatives à un sous-flux de première direction d'un sous-flux bidirectionnel d'une connexion de protocole sur une interface radio entre l'appareil et un équipement utilisateur (110), la première direction allant de l'appareil vers l'équipement utilisateur (110) ;
- la détermination (520), sur la base des informations stockées, du premier sous-flux comme étant un sous-flux de QoS (qualité de service) différenciée, et
- en réponse à la détermination, la provocation de la transmission (530) d'une première indication de la QoS différenciée à un équipement utilisateur, pour ainsi demander à l'équipement utilisateur de construire une règle de classification, pour appliquer à un sous-flux de direction opposée du sous-flux bidirectionnel la même QoS différenciée que celle utilisée pour les paquets dans la première direction, la direction opposée allant vers l'appareil de l'équipement utilisateur (110), dans lequel la première indication comprend une valeur prédéterminée dans un champ d'en-tête d'un paquet transmis sur le sous-flux de première direction du sous-flux bidirectionnel,
- la fourniture d'une deuxième indication à l'équipement utilisateur (110) à la suite de la première indication, dans lequel la deuxième indication indique qu'il faut mettre fin à l'application de la même QoS différenciée pour le sous-flux de direction opposée du sous-flux bidirectionnel.

10. Procédé comprenant :
- la participation à la communication (410), sur une connexion de protocole sur une interface radio entre un équipement utilisateur et une station de base (120), la connexion de protocole véhiculant un sous-flux bidirectionnel ;
- la réception (440), de la station de base, dans une direction de réception du sous-flux bidirectionnel d'une première indication sur la connexion de protocole, la première indication indiquant une QoS (qualité de service) différenciée du sous-flux bidirectionnel, dans lequel la première indication comprend une valeur prédéterminée dans un champ d'en-tête d'un paquet reçu dans la direction de réception du sous-flux bidirectionnel,
- la construction (450) d'une règle de classification pour le sous-flux bidirectionnel dans une direction de transmission en réponse à la première indication, en se basant au moins en partie sur les attributs de la direction de réception du sous-flux bidirectionnel, en inversant les adresses source et destination et les numéros de port du champ d'en-tête, la règle de classification caractérisant les paquets sur le sous-flux bidirectionnel dans la direction de transmission avec la même QoS différenciée que celle utilisée pour les paquets dans la direction de réception du sous-flux bidirectionnel, et
- la réception, dans une direction de réception du sous-flux bidirectionnel, d'une deuxième indication à la suite de la première indication, dans lequel la deuxième indication indique qu'il faut mettre fin à l'application de la même QoS différenciée sur le sous-flux bidirectionnel dans la direction de transmission.
